Europäisches Patentamt

European Patent Office

Office européen des brevets

(19)

(11) Veröffentlichungsnummer: **0 110 028**
**B1**

# (12) EUROPÄISCHE PATENTSCHRIFT

(45) Veröffentlichungstag der Patentschrift:
26.11.86

(21) Anmeldenummer: 83108911.5

(22) Anmeldetag: 09.09.83

(51) Int. Cl.⁴: **B 22 D 41/08**, F 16 B 21/08

(54) Vorrichtung zum Betätigen eines Schieberverschlusses.

(30) Priorität: 28.10.82 DE 3239948

(43) Veröffentlichungstag der Anmeldung:
13.06.84 Patentblatt 84/24

(45) Bekanntmachung des Hinweises auf die Patenterteilung:
26.11.86 Patentblatt 86/48

(84) Benannte Vertragsstaaten:
AT BE CH FR GB IT LI LU SE

(56) Entgegenhaltungen:
DE-B-2 736 817
FR-A-1 102 040
FR-A-2 140 422
GB-A-575 224

(73) Patentinhaber: **Martin & Pagenstecher GmbH,
Schanzenstrasse 31, D-5000 Köln 80 (DE)**

(72) Erfinder: **Beckers, Dieter, Dahlienweg 15, D-5206
Neunkirchen- Seelscheid (DE)**

(74) Vertreter: **Patentanwaltsbüro Cohausz & Florack,
Postfach 14 01 47, D-4000 Düsseldorf 1 (DE)**

## Beschreibung

Die Erfindung betrifft eine Vorrichtung zum Betätigen eines am Gießpfannenboden angeordneten Schieberverschlusses, bestehend aus einer druckmittelbetätigten Zylinder-Kolben-Einheit, wobei dem Zylinder und dem festen Schieberteil einerseits sowie der Kolbenstange und dem beweglichen Schieberteil des Schieberverschlusses andererseits Glieder je einer Kupplung zugeordnet sind, die in Betriebslage in Eingriff stehen.

Bei Schieberverschlüssen wird im allgemeinen eine druckmittelbetätigte Zylinder-Kolben-Einheit zur Betätigung des beweglichen Schieberteils benutzt. Der bewegliche Schieberteil besteht im wesentlichen aus einem verschiebbaren Tragrahmen, der die feuerfeste Schieberplatte trägt. Zur Erzeugung der Schließ- und Öffnungsbewegung kann sich die Zylinder-Kolben-Einheit in ständiger Wirkverbindung mit dem Schieberverschluß befinden. Dies hat jedoch den Nachteil, daß an jeder Gießpfanne eine Zylinder-Kolben-Einheit vorhanden sein muß. Außerdem kann bei fest an der Gießpfanne angeordneter Zylinder-Kolben-Einheit eine Beschädigung derselben beim Transport der Gießpfanne nicht ausgeschlossen werden, zumal die Zylinder-Kolben-Einheit vielfach über die Außenkontur der Gießpfanne hinausragt.

Eine andere Möglichkeit besteht darin, daß für mehrere Gießpfannen nur eine Zylinder-Kolben-Einheit vorhanden ist, die über geeignete Kupplungsmechanismen an den Schieberverschluß an- und abkuppelbar ist. Die Erfindung bezieht sich auf eine solche Vorrichtung.

Bei einer bekannten handelsüblichen Ausführung ist eine Führungsplatte am Zylinder der Zylinder-Kolben-Einheit angebracht, während am Schieberverschluß eine seitlich offene Zylinderhalterung angeordnet ist. Die Zylinder-Kolben-Einheit wird von der Seite her in die Betriebslage gebracht, indem die Führungsplatte in Nuten der Zylinderhalterung eingreift. Der bewegliche Schieberteil ist mit einer Schieberstange ausgerüstet, deren Ende in die Zylinderhalterung hineinragt. Die Verbindung der Kolbenstange der Zylinder-Kolben-Einheit mit der Schieberstange des beweglichen Schieberteiles geschieht durch ein loses Kupplungsstück, welches vom Bedienungspersonal von der Seite her über die hammerkopfartig ausgebildeten Enden der Kolben- bzw. Schieberstange geschoben wird.

Bei einer ähnlichen handelsüblichen Konstruktion ist die ebenfalls seitlich offene Zylinderhalterung mit Kupplungsfedern ausgerüstet, und der Zylinder der Zylinder-Kolben-Einheit besitzt entsprechend ausgebildete Kupplungsnuten. Die Kolbenstange weist einen Hammerkopf und die Schieberstange ein festes Aufnahmestück auf.

In beiden Fällen sind das seitliche Einschieben des Zylinders in die Zylinderhalterung sowie die Herstellung der Verbindung zwischen der Kolbenstange und der Schieberstange des beweglichen Schieberteils schwierig, zumal das Bedienungspersonal dabei in unmittelbarer Nähe der Gießpfanne oder sogar unter der Pfanne arbeiten muß, was insbesondere bei gefüllter Pfanne gefährlich ist. Es ist ferner gemäß der den Oberbegriff bildenden DE-C-27 36 817 bekannt, den Zylinder über einen Bajonettverschluß am geöffneten Schiebergehäuse zu befestigen. Das vordere Ende der Kolbenstange ist als Hammerkopf ausgebildet und der bewegliche Schieberteil besitzt eine sich vertikal erstreckende Schwalbenschwanzführung. Zur Herstellung der Verbindung zwischen Kolbenstange und beweglichem Schieberteil ist es erforderlich, den Hammerkopf in eine derartige Relativlage zur Schwalbenschwanzführung zu bringen, daß beim Schließen des Gehäuses der Hammerkopf in die Schwalbenschwanzführung eingreift. Die Entfernung der Kolben-Zylinder-Einheit ist daher auch nur im geöffneten Zustand des Schieberverschlusses möglich. Diese Konstruktion hat sich in der Praxis nicht bewährt. Man hat daher versucht, die Verbindung zwischen der Kolbenstange und dem beweglichen Schieberteil anstelle des Hammerkopfes mit einem Querbolzen bei geschlossenem Schiebergehäuse vorzunehmen. Dies läßt sich wiederum nur erreichen, wenn die Kolbenstange und der bewegliche Schieberteil eine bestimmte Relativlage zueinander aufweisen. Auch dieser Vorschlag ist in der Praxis nicht benutzt worden.

Bei einer weiteren bekannten Ausführungsform (DE-A-26 03 003) werden die Kupplungsglieder zur Verbindung des Zylinders der Zylinder-Kolben-Einheit mit dem festen Schieberteil einerseits und die Verbindung der Kupplungsglieder zur Verbindung der Kolbenstange der Zylinder-Kolben-Einheit mit dem beweglichen Schieberteil andererseits durch eine Schwenkbewegung der Zylinder-Kolben-Einheit in Eingriff gebracht und durch das in der Ebene der Schwenkbewegung wirksame Kippmoment in Eingriff gehalten. Auch bei dieser Konstruktion kann die vorstehend beschriebene Betriebslage nur erreicht werden, wenn sich die Kupplungsglieder der Kolbenstange und des beweglichen Schieberteiles in einer entsprechenden Relativlage zueinander befinden.

Die Relativlagen der vorgenannten Ausführungsformen sind jedoch häufig schwierig einzustellen.

Der vorliegenden Erfindung liegt nun die Aufgabe zugrunde, eine Vorrichtung zum Betätigen (Öffnen und Schließen) eines Schieberverschlusses zu schaffen, die auf einfache Weise eine rasche Verbindung zwischen dem Zylinder der Zylinder-Kolben-Einheit und dem festen Schieberteil bzw. einem damit verbundenen Zwischenstück herstellen läßt und ein problemloses Kuppeln der Kolbenstange der Zylinder-Kolben-Einheit mit dem beweglichen Schieberteil ermöglicht.

Die Erfindung löst diese Aufgabe bei einer Vorrichtung der eingangs beschriebenen Gattung durch die Kombination folgender Merkmale:

die Glieder der ersten dem festen Schieberteil und dem Zylinder zugeordneten Kupplung bestehen aus einem Bajonettverschluß,

die Glieder der zweiten dem beweglichen Schieberteil und der Kolbenstange zugeordneten Kupplung bestehen aus einem Rastgesperre.

In weiterer Ausgestaltung weist die Vorrichtung folgende zusätzlichen Merkmale auf:

am festen Schieberteil ist eine Zylinderhalterung befestigt, die an ihrem freien Ende als Aufnahmeteil eines 90°-Bajonettverschlusses ausgebildet ist,

der Zylinder der Zylinder-Kolben-Einheit ist an der Austrittseite der Kolbenstange als zugehöriges Einsteckteil des 90°-Bajonettverschlusses ausgebildet für das Kuppeln des Zylinders mit der Zylinderhalterung,

das freie Ende der Kolbenstange der Zylinder-Kolben-Einheit weist zwei unter der Wirkung von Druckfedern stehende diametral gegenüberliegende, radial bewegliche Sperrer auf,

der bewegliche Schieberteil des Schieberverschlusses weist an seiner der Kolbenstange zugewandten Seite eine Einschubklaue auf für das Kuppeln mit der Kolbenstange der Zylinder-Kolben-Einheit,

die Einschubklaue ist so ausgebildet, daß beim Einschieben des freien Endes der Kolbenstange die Sperrer durch die Wirkung der Druckfedern hinter zwei Vorsprünge der Einschubklaue einrasten und daß beim Drehen der Zylinder-Kolben-Einheit um 90° um ihre Längsachse die Vorsprünge die Sperrer zum Entkuppeln freigeben, wobei gleichzeitig der 90°-Bajonettverschluß zwischen dem Zylinder der Zylinder-Kolben-Einheit und der Zylinderhalterung gelöst werden kann,

die Kolbenstange ist im Zylinder verdrehsicher angeordnet.

Eine Weiterentwicklung der erfindungsgemäßen Vorrichtung, die mit Vorteil benutzt wird, wenn der 90°-Bajonettverschluß zwischen der Zylinderhalterung und dem Zylinder der Zylinder-Kolben-Einheit für das Bedienungspersonal gut zugänglich am Pfannenrand liegen soll, weist folgende Merkmale auf:

der bewegliche Schieberteil ist an seiner der Kolbenstange zugewandten Seite mit einer Schieberstange verbunden, die in eine verlängerte Zylinderhalterung hineinragt und einen Kupplungskopf zum Einschieben des freien Endes der Kolbenstange aufweist,

der Kupplungskopf besitzt in seiner Seitenwand zwei gegenüberliegende Ausnehmungen, in welche die Sperrer beim Einschieben des freien Endes der Kolbenstange einrasten, der Kupplungskopf weist ferner schräge Auflaufflächen auf, durch welche beim Drehen der Zylinder-Kolben-Einheit um 90° um ihre Längsachse die federbelasteten Sperrer in die Kolbenstange zum Entkuppeln eingedrückt werden, während gleichzeitig der 90°-Bajonettverschluß zwischen der verlängerten Zylinderhalterung und dem Zylinder der Zylinder-Kolben-Einheit gelöst werden kann,

die Kolbenstange ist im Zylinder verdrehsicher angeordnet.

Beim Einsatz der erfindungsgemäßen Vorrichtung werden als erster Kupplungsschritt die Kupplungsglieder des festen Schieberteils und des Zylinders der Zylinder-Kolben-Einheit miteinander in Verbindung gebracht, indem der Einsteckteil des Bajonettverschlusses des Zylinders in den zugehörigen Aufnahmeteil des Bajonettverschlusses am freien Ende der Zylinderhalterung eingeschoben und durch Drehen der Zylinder-Kolben-Einheit die Bajonettverschlußverbindung hergestellt wird.

Die Kolbenstange befindet sich hierbei in ihrer im Zylinder eingefahrenen Position. Als zweiter Kupplungsschritt wird durch Betätigen der Zylinder-Kolben-Einheit die Kolbenstange so lange vorwärts bewegt, bis ihr freies Ende entweder in die Einschubklaue am beweglichen Schieberteil oder bei Anordnung einer verlängerten Zylinderhalterung in den Kupplungskopf der Schieberstange am beweglichen Schieberteil mit ihren Sperrern einrastet.

Mit der erfindungsgemäßen Vorrichtung ist somit in vorteilhafter Weise eine einfache Durchführung des ersten und zweiten Kupplungsschrittes möglich, ohne daß das Bedienungspersonal die Kupplungsglieder vorher in eine bestimmte Relativlage zueinander bringen muß. Auch das Entkuppeln gestaltet sich sehr einfach. Durch Drehen der Zylinder-Kolben-Einheit um ihre Längsachse, vorzugsweise um 90° wird der Bajonettverschluß zwischen dem Zylinder und der Zylinderhalterung gelöst. Da beim Drehen der Zylinder-Kolben-Einheit gleichzeitig auch die verdrehsicher im Zylinder angeordnete Kolbenstange um 90° gedreht wird, geben die Einschubklaue an dem verschiebbaren Tragrahmen bzw. bei Verwendung einer verlängerten Zylinderhalterung der Kupplungskopf an der Schieberstange die federbelasteten Sperrer am freien Ende der Kolbenstange frei. Durch Zurückziehen der Zylinder-Kolben-Einheit ist der Entkupplungsvorgang abgeschlossen.

Ein Ausführungsbeispiel der Erfindung wird nachstehend anhand der Zeichnung erläutert. Es zeigen:

Fig. 1 eine teilweise im Schnitt dargestellte Seitenansicht der erfindungsgemäßen Vorrichtung, die über eine kurze Zylinderhalterung mit dem Schieberverschluß verbunden ist,

Fig. 2 eine Draufsicht auf den Tragrahmen mit Einschubklaue mit gekuppelter Kolbenstange;

Fig. 3 eine Draufsicht entsprechend Fig. 2 mit um 90° gedrehter, entkuppelter Kolbenstange;

Fig. 4 eine teilweise im Schnitt dargestellte Seitenansicht der erfindungsgemäßen Vorrichtung, die über eine verlängerte Zylinderhalterung mit dem Schieberverschluß verbunden ist,

Fig. 5 eine teilweise im Schnitt dargestellte Seitenansicht der Kolbenstange, der Zylinder-Kolben-Einheit und des Kupplungskopfes der Schieberstange in gekuppelter Position;

Fig. 6 einen Schnitt nach der Linie A-B in Fig. 5;

Fig. 7 eine teilweise im Schnitt dargestellte Seitenansicht der Kolbenstange der Zylinder-Kolben-Einheit und des Kupplungskopfes der Schieberstange mit um 90° gegenüber Fig. 5 gedrehter entkuppelter Kolbenstange,

Fig. 8 einen Schnitt nach der Linie A-B in Fig. 7.

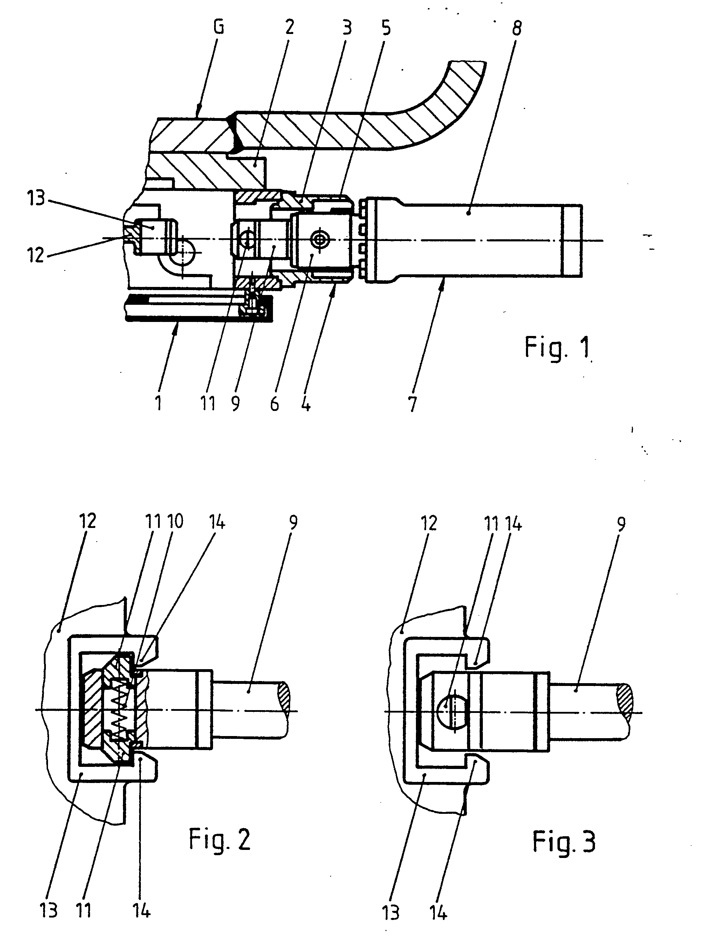

Fig. 1 zeigt einen teilweise dargestellten Schieberverschluß 1, dessen Gehäuse als fester Schieberteil 2 an einem Gießpfannenboden G angeordnet ist. Am Gehäuse ist eine kurze Zylinderhalterung 3 befestigt, deren freies Ende als Aufnahmeteil 5 eines 90°-Bajonettverschlusses 4 ausgebildet ist. Die Zylinder-Kolben-Einheit 7 zur Durchführung des Öffnungs- und Schließvorganges des Schieberverschlusses 1 besteht aus dem Zylinder 8, dessen eines Ende als Einsteckteil 6 des 90°-Bajonettverschlusses 4 ausgebildet ist und aus der Kolbenstange 9. Die Kolbenstange 9 besitzt an ihrem den einen Teil des Rastgesperres 19 bildenden freien Ende zwei Sperrer 11, die mit Druckfedern 10 in Verbindung stehen. Der bewegliche Schieberteil 12 in Form eines Tragrahmens trägt die nicht dargestellte Schieberplatte des Schieberverschlusses 1 und weist an dem der Zylinder-Kolben-Einheit 7 zugewandten Ende als weiteren Teil des Rastgesperres 19 eine Einschubklaue 13 auf (s. Fig. 1 u. 2).

Der Kupplungsvorgang läuft wie folgt ab:

Der Bedienungsmann schiebt das Einsteckteil 6 am Zylinder 8 der Zylinder-Kolben-Einheit 7 in den Aufnahmeteil 5 der Zylinderhalterung 3 und verdreht den Zylinder 8 um 90° um seine Längsachse. Dadurch ist der 90°-Bajonettverschluß 4 verriegelt. Der Bedienungsmann bewirkt jetzt durch Betätigen der Zylinder-Kolben-Einheit 7 eine Vorwärtsbewegung der verdrehsicher im Zylinder 8 angeordneten Kolbenstange 9. Das freie Ende der Kolbenstange 9 fährt dabei in die Einschubklaue 13 des Tragrahmens 12 ein, wobei die federbelasteten Sperrer 11 hinter die Vorsprünge 14 der Einschubklaue 13 einrasten. Der Kupplungsvorgang ist hiermit abgeschlossen. Durch Betätigen der Zylinder-Kolben-Einheit 7 können jetzt die Öffnungs- und Schließvorgänge des Schieberverschlusses 1 durchgeführt werden.

Der Entkupplungsvorgang nach beendetem Gießvorgang läuft wie folgt ab:

Der Bedienungsmann dreht den Zylinder 8 der Zylinder-Kolben-Einheit 7 wieder um 90° um seine Längsachse und löst damit den 90°-Bajonettverschluß 4. Die verdrehsicher im Zylinder 8 angeordnete Kolbenstange 9 wird bei diesem Vorgang um 90° mitgedreht. Diese Position ist in Fig. 3 dargestellt. Sie zeigt, daß die Vorsprünge 14 die Sperrer 11 freigegeben haben. Mit dem Zurückziehen der Zylinder-Kolben-Einheit 7 durch den Bedienungsmann ist der Entkupplungsvorgang abgeschlossen.

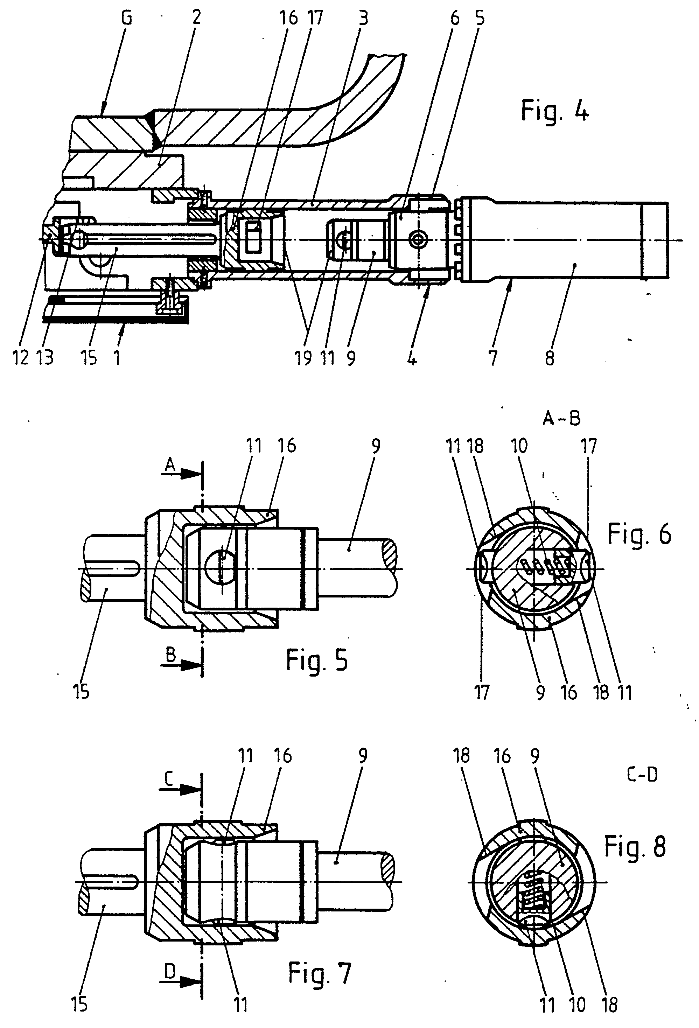

Fig. 4 zeigt wie Fig. 1 einen teilweise dargestellten Schieberverschluß 1, dessen Gehäuse als fester Schieberteil 2 an einem Gießpfannenboden G angeordnet ist. Am Gehäuse ist jedoch eine verlängerte Zylinderhalterung 3' befestigt, deren freies Ende über den Pfannenrand hinausragt. Hierdurch wird die Arbeit des Bedienungspersonals beim Kuppeln und Entkuppeln erleichtert. Das freie Ende der verlängerten Zylinderhalterung 3' ist wie bei der Ausführung gemäß Fig. 1 als Aufnahmeteil 5 eines 90°-Bajonettverschlusses ausgebildet. Auch die Zylinder-Kolben-Einheit 7 weist die gleichen Merkmale wie die entsprechende Zylinder-Kolben-Einheit gemäß Fig. 1 auf. An der Einschubklaue 13 des Tragrahmens als beweglicher Schieberteil 12 ist eine Schieberstange 15 befestigt, die mit einem Kupplungskopf 16 in die Zylinderhalterung 3' hineinragt, wobei der Kupplungskopf 16 verschiebbar in der Zylinderhalterung 3' gelagert ist. Wie die Figuren 4, 6 und 8 zeigen, besitzt der Kupplungskopf 16 seitliche Ausnehmungen 17 und schräge Auflaufflächen 18.

Der Kupplungsvorgang läuft wie folgt ab:

Der Bedienungsmann schiebt das Einsteckteil 6 am Zylinder 8 der Zylinder-Kolben-Einheit 7 in den Aufnahmeteil 5 der Zylinderhalterung 3' und verdreht den Zylinder 8 um 90° um seine Längsachse. Dadurch ist der 90°-Bajonettverschluß 4, wie bereits zu Fig. 1 beschrieben, verriegelt. Der Bedienungsmann bewirkt jetzt durch Betätigen der Zylinder-Kolben-Einheit 7 eine Vorwärtsbewegung der verdrehsicher im Zylinder 8 angeordneten Kolbenstange 9. Das freie Ende der Kolbenstange 9 fährt dabei, wie Fig. 5 zeigt, in den Kupplungskopf 16 der Schieberstange 15 ein, wobei die federbelasteten Sperrer 11 in die Ausnehmungen 17 in der Seitenwand des Kupplungskopfes 16 einrasten. Diese Position zeigt Fig. 6.

Der Entkupplungsvorgang nach beendetem Gießvorgang läuft wie folgt ab:

Der Bedienungsmann dreht den Zylinder 8 der Zylinder-Kolben-Einheit 7 um 90° um seine Längsachse und löst damit den 90°-Bajonettverschluß 4. Die verdrehsicher im Zylinder 8 angeordnete Kolbenstange 9 wird bei diesem Vorgang ebenfalls um 90° gedreht. Diese Position ist in den Figuren 7 und 8 dargestellt. Beim Drehen der Kolbenstange 9 werden die Sperrer 11 durch die schrägen Auflaufflächen 18 in die Kolbenstange 9 zurückgedrückt, wodurch die Verriegelung mit den Ausnehmungen 17 aufgehoben wird. Mit dem Zurückziehen der Zylinder-Kolben-Einheit 7 durch den Bedienungsmann ist der Entkupplungsvorgang abgeschlossen.

## Patentansprüche

1. Vorrichtung zum Betätigen eines am Gießpfannenboden angeordneten Schieberverschlusses, bestehend aus einer druckmittelbetätigten Zylinder-Kolben-Einheit (7), wobei dem Zylinder (8) und dem festen Schieberteil (2) einerseits sowie der Kolbenstange (9) und dem beweglichen Schieberteil (12) des Schieberverschlusses (1) andererseits Glieder je einer Kupplung zugeordnet sind, die in Betriebslage in Eingriff stehen, <u>gekennzeichnet durch</u> die Kombination folgender Merkmale:

die Glieder der ersten dem festen Schieberteil (2) und dem Zylinder (8) zugeordneten Kupplung bestehen aus einem Bajonettverschluß (4) und

die Glieder der zweiten dem beweglichen Schieberteil (12) und der Kolbenstange (9) zugeordneten Kupplung bestehen aus einem Rastgesperre (19).

2. Vorrichtung nach Anspruch 1, <u>gekennzeichnet durch</u> folgende zusätzliche Merkmale:

an dem festen Schieberteil (2) ist eine Zylinderhalterung (3) befestigt, die an ihrem freien Ende als Aufnahmeteil (5) eines 90°-Bajonettverschlusses (4) ausgebildet ist,

der Zylinder (8) ist an der Austrittsseite der Kolbenstange (9) als zugehöriges Einsteckteil (6) des 90°-Bajonettverschlusses (4) ausgebildet,

das freie Ende der Kolbenstange (9) weist zwei unter der Wirkung von Druckfedern (10) stehende diametral gegenüberliegende, radial bewegliche Sperrer (11) auf,

der bewegliche Schieberteil (12) weist an seiner der Kolbenstange (9) zugewandten Seite eine Einschubklaue (13) auf, die so ausgebildet ist, daß beim Einschieben des freien Endes der Kolbenstange (9) die Sperrer (11) durch die Wirkung der Druckfeder (10) hinter zwei Vorsprüngender Einschubklaue (13) einrasten und daß beim Drehen der Zylinder-Kolben-Einheit (7) um 90° die Vorsprünge (14) die Sperrer (11) zum Entkuppeln freigeben und gleichzeitig der 90°-Bajonettverschluß (4) zwischen dem Zylinder (8) und der Zylinderhalterung (3) lösbar ist, und

die Kolbenstange (9) ist im Zylinder (8) verdrehsicher angeordnet.

3. Vorrichtung nach Anspruch 1, <u>gekennzeichnet durch</u> folgende zusätzlichen Merkmale:

der bewegliche Schieberteil (12) ist an seiner der Kolbenstange (9) zugewandten Seite mit einer Schieberstange (15) verbunden, die in eine verlängerte Zylinderhalterung (3') hineinragt und einen Kupplungskopf (16) zum Einschieben des freien Endes der Kolbenstange (9) aufweist,

der Kupplungskopf (16) besitzt in seiner Seitenwand zwei gegenüberliegende Ausnehmungen (17), in welche die Sperrer (11) beim Einschieben des freien Endes der Kolbenstange (9) einrasten,

der Kupplungskopf (16) weist schräge Auflaufflächen (18) auf, durch welche beim Drehen der Zylinder-Kolben-Einheit (7) um 90° um ihre Längsachse die Sperrer (11) in die Kolbenstange (9) zum Entkuppeln eingedrückt werden, während gleichzeitig der 90°-Bajonettverschluß (4) zwischen der verlängerten Zylinderhalterung (3') und dem Zylinder (8) der Zylinder-Kolben-Einheit (7) gelöst wird.

## Claims

1. Device for actuating a sliding seal arranged in the base of a foundry ladle, comprising a cylinder-piston unit (7) actuated by a pressure medium, the cylinder (8) and the fixed slider member (2), on the one hand, and the piston rod (9) and movable slider member (12) of the sliding seal (1), on the other hand, being associated with members of, in each case, one coupling which, in the operating position, are engaged, characterised by the combination of the following features:

the members of the first coupling associated with the fixed slider member (2) and the cylinder (8) comprise a bayonet catch (4), and

the members of the second coupling associated with the movable slider member (12) and the piston rod (9) comprise a notch locking mechanism (19).

2. Device according to claim 1, characterised by the following additional features:

there is secured to the fixed slider member (2) a cylinder mounting (3) which, at its free end, is designed as the accommodating part of a 90°-bayonet catch (4), the cylinder (8) is designed, on the outlet side of the piston rod (9), as the associated insertion part (6) of the 90°-bayonet catch (4),

the free end of the piston rod (9) has two diametrally opposed, radially movable catches (11) which are under the action of pressure springs (10),

the movable slider member (12) has, at its side facing the piston rod (9), a plug-in claw (13) which is so designed that, when the free end of the piston rod (9) is pushed in, the catches (11), under the action of the pressure spring (10), snap in behind two projecting plug-in claws (13) and, when the cylinder-piston unit (7) is turned through 90°, the projections (14) release the catch (11) for uncoupling and simultaneously the 90°-bayonet catch (4) between the cylinder (8) and the cylinder mounting (3) can be released, and

the piston rod (9) is arranged in the cylinder (8) so that it cannot turn.

3. Device according to claim 1, characterised by the following additional features:

the movable slider member (12) is connected, on its side facing the piston rod (9), to a push rod (15) which projects into an extended cylinder mounting (3') and has a coupling head (16) for insertion of the free end of the piston rod (9),

the coupling head (16) has, in its side wall, two opposed recesses (17) into which the catches (11) snap when the free end of the piston rod (9) is pushed in, and

the coupling head (16) has inclined leading surfaces (18) by means of which, when the cylinder-piston unit (7) is turned through 90° about its longitudinal axis, the catches (11) are pressed into the piston rod (9) for uncoupling, while, at the same time, the 90°-bayonet catch (4) between the extended cylinder mounting (3') and the cylinder (8) of the cylinder-piston unit is released.

**Revendications**

1.- Dispositif pour actionner une fermeture par tiroir prévue au fond d'une poche de coulée, dispositif constitué d'un ensemble cylindre-piston (7) actionné par un fluide sous pression, des organes d'accouplement étant respectivement associés, d'une part au cylindre (8) et à la partie fixe (2) du tiroir, et, d'autre part, à la tige (9) du piston et à la partie mobile (12) du tiroir de la fermeture (1), ces organes étant en prise dans la position de fonctionnement, dispositif caractérisé par la combinaison des particularités suivantes :
- les organes du premier accouplement associé à la partie fixe (2) du tiroir et au cylindre (8) sont constitués par une fermeture à baïonnette (4),
- les organes du deuxième accouplement associé à la partie mobile (12) du tiroir et à la tige de piston (9) sont constitués par un encliquetage d'arrêt (19).

2.- Dispositif selon la revendication 1, caractérisé par les particularités supplémentaires suivantes :
- sur la partie fixe (2) du tiroir est fixé un support (3) de cylindre, revêtant à son extrémité libre la forme de la partie réceptrice (5) d'une fermeture à baïonnette à 90°,
- le cylindre (8) est réalisé sur le côté sortie de la tige de piston (9) sous la forme de la partie enfichable (6) de la fermeture à baïonnette (4),
- l'extrémité libre de la tige de piston (9) comporte deux verrous (11) diamètralement opposés, mobiles radialement et sollicités par des ressorts de pression (10),
- la partie mobile (12) du tiroir comporte sur son côté, en regard de la tige de piston (9) une griffe d'introduction (13) qui est prévue de façon que lors de l'introduction de l'extrémité libre de la tige de piston (9), les verrous (11) viennent s'enclencher sous l'action du ressort (10) derrière deux griffes d'introduction (13) en saillie et que lors du pivotement de l'ensemble cylindre-piston (7) de 90°, les saillies (14) libèrent les verrous (11) pour le désaccouplement et simultanément la fermeture à baïonnette à 90° (4) entre le cylindre (8) et le support de cylindre (3) est susceptible d'être libérée,
- la tige de piston (9) est bloquée en rotation dans le cylindre (8).

3.- Dispositif selon la revendication 1, caractérisé en ce que :
- la partie mobile (12) du tiroir est, sur son côté tourné vers la tige de piston (9), reliée à une tige de tiroir (15) qui pénètre dans un support de cylindre prolongé, (3') et comporte une tête d'accouplement (16) pour l'introduction de l'extrémité libre de la tige de piston (9),
- cette tête d'accouplement (16) comporte dans sa paroi latérale deux évidements opposés (17) dans lesquels viennent s'enclencher les verrous (11) lors de l'introduction de l'extrémité libre de la tige de piston (9),
- la tête d'accouplement (16) comporte des surfaces d'accostage obliques (18) grâce auxquelles, lors du pivotement de l'ensemble cylindre-piston (7) de 90° autour de son axe longitudinal, les verrous (11) sont poussés sur la tige de piston (9) pour le désaccouplement, tandis que simultanément la fermeture à baïonnette à 90° (4) entre le support de cylindre prolongé (3') et le cylindre (8) de l'ensemble cylindre-piston (7) est libérée.

Fig. 1

Fig. 2

Fig. 3

Fig. 4

Fig. 5

Fig. 6

A – B

Fig. 7

Fig. 8

C – D